# EUROPÄISCHE PATENTSCHRIFT

(11) **EP 3 738 788 B1**
(45) Veröffentlichungstag und Bekanntmachung des Hinweises auf die Patenterteilung: **08.03.2023**
(21) Anmeldenummer: 20164132.1
(22) Anmeldetag: 19.03.2020
(51) Int. Cl.: B60C 5/00, B60C 5/08, B60C 5/04

(54) **RAD SOWIE VERFAHREN ZUM HERSTELLEN EINES DERARTIGEN RADES**
WHEEL AND METHOD FOR MANUFACTURING SUCH A WHEEL
ROUE ET SON PROCÉDÉ DE FABRICATION

(30) Priorität: 16.05.2019 DE 102019207123
(43) Veröffentlichungstag der Anmeldung: 18.11.2020
(73) Patentinhaber: Continental Reifen Deutschland GmbH, 30165 Hannover (DE)
(72) Erfinder: Krieger, Ralf - c/o Continental AG, 30419 Hannover (DE)
(74) Vertreter: Continental Corporation

(56) Entgegenhaltungen:
- DE-U1- 29 718 420
- US-A- 5 938 868
- US-A1- 2002 059 972

## Beschreibung

Die Erfindung betrifft ein Rad, insbesondere für Fahrzeuge, gemäß dem Oberbegriff des Anspruches 1, sowie ein Verfahren zur Herstellung eines solchen Rades.

Räder für landwirtschaftliche Maschinen benötigen für einen optimalen Betrieb einen angepassten Reifen-Innendruck. Fährt die landwirtschaftliche Maschine beispielsweise auf der Straße, so liegt der optimale Reifen-Innendruck beispielsweise bei zwischen 1,2 bar bis 2,0 bar. Auf den Acker hingegen liegt der optimale Reifen-Innendruck bei zwischen 0,4 bar und 1,2 bar. Um in beiden Fahrsituationen einen optimalen Reifen-Innendruck einstellen zu können, sind Luftdruckregelanlagen bekannt, mit denen der Reifen-Innendruck mittels eines Kompressors angepasst werden kann. Dazu ist der Kompressor an der landwirtschaftlichen Maschine angeordnet und ermöglicht einen Druckaufbau in einem Reifen-Innenraum eines Luftreifens des Rades über Druckleitungen, die beispielsweise über die Achse des Rades zum Luftreifen geführt werden. Damit kann über den Kompressor der Reifen-Innendruck gezielt angehoben werden. Nachteilig hierbei ist, dass der mit einer derartigen landwirtschaftlichen Maschine mitführbare Kompressor nur eine begrenzte Leistungsfähigkeit hat und die benötigte Anhebung des Reifen-Innendruckes im schnellsten Fall mindestens 15 Minuten dauern kann.

Um dem zu begegnen, sind Räder mit Luftreifen bekannt, die über einen zusätzlichen Druckspeicher unmittelbar am Rad befüllt werden können. Der Druckspeicher ist dabei als ein Luftschlauch ausgeführt, der vollumfänglich auf der Felge des Rades aufgespannt ist und sich damit im Reifen-Innenraum des Luftreifens befindet und diesen teilweise aber nicht vollständig ausfüllt. Damit ist ein Schlauch-Innenraum des Luftschlauches klar von dem Reifen-Innenraum getrennt. Der Luftschlauch weist Festigkeitsträger auf, die es erlauben, einen Schlauch-Innendruck im Schlauch-Innenraum auf maximal ca. 8 bar einzustellen. Der derartig aufgepumpte Luftschlauch nimmt dann ca. 30 % des Reifen-Innenraumes ein, in dem der Reifen-Innendruck vorherrscht. Durch zeitweises Ausbilden einer Verbindung zwischen dem Schlauch-Innenraum und dem Reifen-Innenraum kann eine Druckangleichung stattfinden, durch den der Reifen-Innendruck von z.B. 0,8 bar auf z.B. 1,8 bar innerhalb von nur 30 Sekunden angehoben werden kann.

Nachteilig hierbei ist, dass die Fertigung eines derartigen Luftschlauches zur Anordnung auf der Felge im Reifen-Innenraum sehr aufwändig ist. Dabei ist beispielsweise dafür zu sorgen, dass der Luftschlauch im Reifen-Innenraum den Luftreifen selbst nicht berührt und nach jedem Aufpumpen reproduzierbar auf der Felge positioniert werden kann. Zudem ist der Luftschlauch für jede Reifengröße und Felgenbreite gezielt anzupassen, was eine große Komplexität zur Folge hat. Insgesamt sind somit die Fertigungskosten sowie der Fertigungsaufwand für eine derartige Lösung eines Druckspeichers im Luftreifen sehr hoch.

Die DE 29718 420 U1, US 2002/059972 A1 und US 5 938 868 A offenbaren u.a. unterschiedliche Fahrzeugräder bei denen mit Druckluftvorrichtungen der Reifendruck angepasst werden kann.

Aufgabe der Erfindung ist daher, ein Rad, insbesondere für Fahrzeuge, bereitzustellen, das einfach und kostengünstig zu fertigen ist und zudem einen flexiblen und zuverlässigen Betrieb des jeweiligen Fahrzeuges ermöglicht. Aufgabe der Erfindung ist weiterhin, ein Verfahren zum Herstellen eines derartigen Rades anzugeben.

Diese Aufgabe wird durch ein Rad nach Anspruch 1 sowie ein Verfahren gemäß dem weiteren unabhängigen Anspruch gelöst. Die Unteransprüche geben bevorzugte Weiterbildungen an.

Demnach ist ein Rad, insbesondere für Fahrzeuge, mit einer Felge und einem auf die Felge aufgezogenen Luftreifen vorgesehen, wobei die Felge und der Luftreifen einen Reifen-Innenraum begrenzen, wobei ein in dem Reifen-Innenraum vorherrschender Reifen-Innendruck über ein Reifen-Ventil variabel einstellbar ist, wobei in dem Reifen-Innenraum ein um die Felge umlaufender Luftschlauch mit einem Schlauch-Innenraum angeordnet ist, wobei der Luftschlauch den Reifen-Innenraum teilweise und damit nicht vollständig ausfüllt, wobei ein in dem Schlauch-Innenraum des Luftschlauches vorherrschender Schlauch-Innendruck über ein erstes Schlauch-Ventil variabel einstellbar ist. Somit kann der Reifen-Innendruck in dem vorzugsweise "schlauchlosen" Luftreifen im Normalbetrieb unabhängig von dem Schlauch-Innendruck in dem Luftreifen, der hier als Druckspeicher innerhalb des Rades dient, eingestellt werden. Der aufgepumpte Luftreifen kann demnach auch im unaufgepumpten Zustand des Luftschlauches seine normale Funktion erfüllen.

Erfindungsgemäß ist hierbei vorgesehen, dass der Luftschlauch im Reifen-Innenraum mehrfach um die Felge umlaufend aufgewickelt ist, so dass innerhalb des Reifen-Innenraumes ein Schlauchpaket ausgebildet ist. Dieses Schlauchpaket ist als Druckspeicher zum Speichern von Druckmittel mit dem eingestellten Schlauch-Innendruck ausgebildet, wobei dazu nicht nur ein einmalig umlaufender Luftschlauch vorgesehen ist, sondern ein mehrfach umlaufender Luftschlauch mit mehreren Wicklungen. Daraus ergeben sich bereits mehrere Vorteile:
Zunächst kann das Schlauchpaket dadurch gezielt und einfach an die jeweilige Reifengröße angepasst werden, beispielsweise durch die Anzahl an Wicklungen im Schlauchpaket und/oder die Wahl einer Schlauchlänge des Luftschlauches. Als Grundlage für die unterschiedlichen Ausführungen des Schlauchpaketes kann immer derselbe Luftschlauch gewählt werden, der nur in unterschiedlicher Art und Weise aufgewickelt und abgelängt wird. Neben der Anzahl an Wicklungen und der Wahl der Schlauchlänge kann aber auch ein Schlauch-Innendurchmesser variabel gewählt werden, so dass ein weiterer Parameter zur optimalen Abstimmung des Schlauchpaketes einbezogen werden kann. Der mehrfach umlaufende Luftschlauch des Schlauchpaketes kann beispielsweise eine Schlauchlänge von zwischen 12 m und 250 m, vorzugsweise 40 m, und einen Schlauch-Innendurchmesser von zwischen 10 mm und 200 mm, vorzugsweise 75 mm, aufweisen.

Dadurch kann auch in einfacher Weise eingestellt werden, wie groß der Bereich ist, den das Schlauchpaket in dem Reifen-Innenraum einnehmen soll, so dass auch der Funktionsumfang des Schlauchpaketes, d.h. die Art und Weise der Druckspeicherung, in einfacher Weise angepasst werden kann. Die Ausbildung des Schlauchpaketes ist demnach sehr einfach und variabel möglich.

Vorzugsweise ist weiterhin vorgesehen, dass das Schlauchpaket im entlüfteten Zustand des Luftschlauches einen ersten Wickeldurchmesser aufweist und sich das Schlauchpaket bei Erhöhen des Schlauch-Innendruckes im Schlauch-Innenraum an einen zweiten Wickeldurchmesser annähert, wobei der zweite Wickeldurchmesser geringer ist als der erste Wickeldurchmesser. Dadurch kann vorteilhafterweise erreicht werden, dass sich das Schlauchpaket unter Druckbeaufschlagung auf der Felge nachträglich selbst korrekt positionieren und/oder festziehen kann. Damit sind im Betrieb keine zusätzlichen Mittel oder eine nachträgliche manuelle Positionierung bzw. Festlegung nötig.

Vorzugsweise ist dabei vorgesehen, dass der erste Wickeldurchmesser des Schlauchpaketes größer oder gleich einem Nenndurchmesser der Felge ist, so dass ein vorab ausgebildetes Schlauchpaket bei entlüftetem Luftschlauch beschädigungsfrei über das Felgenhorn der Felge bewegt werden kann, und/oder der zweite Wickeldurchmesser des Schlauchpaketes einem Tiefbett-Durchmesser eines Tiefbettes der Felge entspricht, so dass sich das Schlauchpaket beim Erhöhen des Schlauch-Innendruckes in das Tiefbett der Felge legt, zum Zentrieren und Halten des Schlauchpaketes an der Felge. Dadurch kann vorteilhaferweise erreicht werden, dass beim Herstellen des Rades mit einem derartigen Druckspeichern im Reifen-Innenraum ein Ausbilden des Schlauchpaketes bereits vorab ermöglicht wird, das anschließend ohne die Gefahr von Beschädigungen vorzugsweise ohne Zugbelastungen auf die Felge über das Felgenhorn aufgezogen werden kann. Anschließend verringert sich der Durchmesser des Schlauchpaketes unter Druckbeaufschlagung derartig, dass sich der Durchmesser an den zweiten WickelDurchmesser annähert, wobei dieser dem (Außen-)Durchmesser des Tiefbettes der Felge entspricht. Dadurch zieht sich das Schlauchpaket vollumfänglich an die Felge und wird aufgrund der U-Form des Tiefbettes in diesem zentriert und gleichzeitig darin festgehalten. Dadurch können in einfacher Weise eine Zentrierung und eine Positionierung erreicht werden.

Vorzugsweise wird dies dadurch bewirkt, dass der Luftschlauch eine Außenschicht, eine Innenschicht sowie eine dazwischen eingebettete Zwischenschicht aufweist, wobei die Zwischenschicht vorzugsweise zwei Lagen von Festigkeitsträgern, insbesondere Verstärkungsfäden, vorzugsweise Cordfäden oder Zwirnfäden, aufweist, wobei die Festigkeitsträger in jeder Lage gegenüber einer Umfangsrichtung des Luftschlauches um einen Winkel angewinkelt ausgerichtet sind. Unter Druckbeaufschlagung verhält sich der Luftschlauch dadurch nicht mehr neutral, d.h. richtungsabhängig unterschiedlich, wobei über den Winkel der Festigkeitsträger gezielt eingestellt werden kann, dass sich der Luftschlauch zusammenzieht und dadurch der Durchmesser des Schlauchpaketes verringert wird. Gleichzeitig kann eine Anpassung des Schlauch-Innendurchmessers bewirkt werden, wodurch sich das Schlauchpaket im Tiefbett auch zur Seite hin festsetzen kann, so dass eine Zentrierung erreicht wird.

In besonders vorteilhafterweise kann dies erreicht werden, wenn der Winkel der Ausrichtung der Festigkeitsträger gegenüber der Umfangsrichtung des Luftschlauches in der einen Lage zwischen +10° und +53°, vorzugsweise zwischen +40° und +48°, und in der anderen Lage zwischen -10° und -53°, vorzugsweise zwischen -40° und -48°, d.h. genau entgegengesetzt zur ersten Lage und dabei vorzugsweise in einem Kreuzverband liegt.

Vorzugsweise ist weiterhin vorgesehen, dass einzelne Wicklungen des mehrfach um die Felge umlaufenden Luftschlauches durch Verbindungsmittel und/oder durch eine Verdrillung von einzelnen Wicklungen und/oder einer Verflechtung von einzelnen Wicklungen aneinandergehalten sind. Dadurch kann erreicht werden, dass die vorab ausgebildeten Schlauchpakete nachträglich auf die Felge aufgebracht werden können, ohne dass sich der Luftschlauch abwickelt. Dazu können separate Verbindungsmittel oder aber die Wicklungen des Schlauchpaketes selbst in Form einer Verflechtung oder einer Verdrillung verwendet werden, so dass auf zusätzliche Elemente verzichtet werden kann.

Vorzugsweise ist weiterhin vorgesehen, dass der Schlauch-Innenraum mit dem Reifen-Innenraum strömungsverbunden werden kann zum Bewirken einer Druckangleichung zwischen dem Reifen-Innendruck und dem Schlauch-Innendruck. Dadurch kann der Druckspeicher zum gezielten Anpassen des Reifen-Innendruckes verwendet werden, indem im Betrieb eine Strömungsverbindung zwischen beiden ausgebildet wird.

Dazu kann vorzugsweise vorgesehen sein, dass der Schlauch-Innenraum über ein schaltbares zweites Schlauch-Ventil mit dem Reifen-Innenraum strömungsverbunden werden kann, wobei das zweite Schlauch-Ventil ein elektrisch und/oder manuell schaltbares Ventil ist. Somit kann zum jeweilig benötigten Zeitpunkt gezielt eine Verbindung zwischen beiden Innenräumen ausgebildet werden, beispielsweise bei einem Rad für landwirtschaftlichen Maschinen, wenn diese von einem Betrieb auf den Acker zu einem Betrieb auf der Straße übergeht, wobei für beide Umgebungen unterschiedliche optimale Reifen-Innendrücke angemessen sind. Vorzugsweise ist dazu vorgesehen, dass der Reifen-Innendruck im Betrieb des Rades geringer ist als der Schlauch-Innendruck, wobei der Schlauch-Innendruck zwischen 5bar und 25bar einstellbar ist. Darüber ist dann eine Druckanpassung beispielsweise von zwischen 0,8bar und 1,2bar auf zwischen 1,2bar und 2bar in geringer Zeit möglich, nachdem eine Strömungsverbindung ausgebildet ist.

Für eine andere Anwendung kann der Druckspeicher in Form des Schlauchpaketes aber auch für einen Notlaufbetrieb vorgesehen sein. Demnach kann das jeweilige Fahrzeug bei einem Defekt im Luftreifen und demnach einem Nachlassen des Reifen-Innendruckes weiterhin betrieben werden, da das unter dem Schlauch-Innendruck stehende Schlauchpaket ein Betreiben des jeweiligen Fahrzeuges zumindest unter gewissen Umständen noch zulässt. Beispielsweise kann ein Fahrzeug dann noch mit geringer Geschwindigkeit in stabiler Weise bis auf den Randstreifen oder bis zur nächsten Werkstatt befördert werden, da der unter dem Schlauch-Innendruck von zwischen 5bar und 25bar stehende Luftschlauch weiterhin für eine gewisse Spurtreue des Rades sorgen kann.

Vorzugsweise ist weiterhin vorgesehen, dass der Luftschlauch ein erstes Ende und ein zweites Ende aufweist, wobei zumindest das erste Ende luftdicht verschlossen ist. Dadurch kann das Schlauchpaket in einfacher Weise als Wickelkörper ausgebildet werden. Vorzugsweise ist dabei vorgesehen, dass das zweite Ende geöffnet ist und über das geöffnete zweite Ende der Schlauch-Innendruck im Schlauch-Innenraum eingestellt werden kann, wobei dazu an dem zweiten Ende ein durch eine Felgenöffnung in der Felge geführtes Anschlussstück angeordnet ist und das Anschlussstück mit dem ersten Schlauch-Ventil in Strömungsverbindung steht zum Einstellen des Schlauch-Innendruckes im Schlauch-Innenraum über das zweite Ende. Vorzugsweise wird die Felgenöffnung dabei durch das Anschlussstück und ggf. weitere Dichtelemente abgedichtet, so dass der Reifen-Innenraum weiterhin hermetisch abgedichtet bleibt. Eine derartige Ausführung des Luftschlauches ermöglich die einfache Ausbildung des Schlauchpaketes, indem der Luftschlauch ausgehend vom ersten Ende in mehreren Wicklungen aufgewickelt wird. Über das nach außen geführte Anschlussstück kann über das zweite Ende der Schlauch-Innendruck nachträglich gezielt eingestellt werden.

In einem Verfahren zum Herstellen eines erfindungsgemäßen Rades sind mindestens die folgenden Schritte vorgesehen:
- Bereitstellen einer Felge, eines Luftreifens sowie eines Luftschlauches;
- Aufwickeln des Luftschlauches unter Ausbildung eines Schlauchpaketes mit einem ersten Wickeldurchmesser;
- Einlegen des Schlauchpaketes in den Luftreifen;
- Aufziehen des Luftreifens samt Schlauchpaket über das Felgenhorn auf die Felge, so dass ein Reifen-Innenraum zwischen der Felge und dem Luftreifen ausgebildet wird und das Schlauchpaket oberhalb des Tiefbettes der Felge in dem Reifen-Innenraum positioniert ist und damit mehrfach um die Felge umlaufend aufgewickelt ist.

Anschließend kann das Anschlussstück des Schlauchpaketes abdichtend durch die Felgenöffnung in der Felge gesteckt werden. Vorzugsweise ist dabei vorgesehen, dass für den Betrieb des Rades weiterhin folgende Schritte durchgeführt werden:
- Erhöhen eines Schlauch-Innendruckes im Luftschlauch zum Zentrieren und Festlegen der Position des Schlauchpaketes an der Felge;
- Erhöhen des Reifen-Innendruckes zum Aufpumpen des Luftreifens.

Vorzugsweise ist vorgesehen, dass der Schlauch-Innenraum des Luftschlauches des Schlauchpaketes mit dem Reifen-Innenraum des Luftreifens zumindest zeitweise verbunden wird zum Erhöhen des Reifen-Innendruckes im Betrieb des Rades und/oder das Schlauchpaket als Notlaufelement in dem Rad bei einer Entlüftung des Reifen-Innenraumes aufgrund einer Beschädigung des Luftreifens verwendet wird. Dadurch kann ein derartig hergestelltes Rad variabel eingesetzt werden, wobei durch das Schlauchpaket auch ein zuverlässiger Betrieb gewährleistet werden kann.

Die Erfindung wird im Folgenden anhand von Ausführungsbeispielen näher erläutert. Es zeigen:
- Fig. 1: eine Schnittansicht eines Rades mit einem Luftreifen und einem Schlauchpaket mit entlüftetem Luftschlauch;
- Fig. 2: eine Draufsicht auf den abgewickelten Luftschlauch gemäß Fig. 1;
- Fig. 3: das Rad gemäß Fig. 1 im angepumpten Zustand des Luftschlauches des Schlauchpaketes;
- Fig. 4a-d: Detailansichten des Schlauchpaketes gemäß Fig. 1 und 3 in unterschiedlichen Varianten.

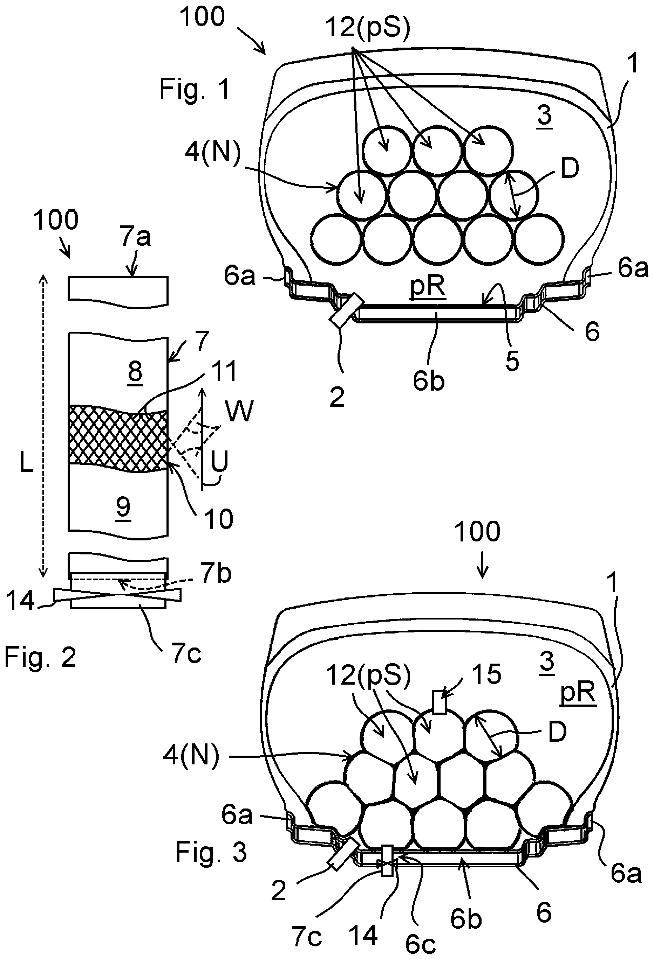

Gemäß Figur 1 ist ein Rad 100 mit einem Luftreifen 1, beispielsweise für eine landwirtschaftliche Maschine, einen PKW, einen LKW, ein Flugzeuge, usw., dargestellt, wobei der Luftreifen 1 gemäß diesem Ausführungsbeispiel ein schlauchloser Reifen ist. Der Luftreifen 1 kann über ein Reifen-Ventil 2 (schematische Darstellung) aufgepumpt werden, so dass in einem Reifen-Innenraum 3 ein bestimmter Reifen-Innendruck pR eingestellt werden kann. Der Luftreifen 1 ist auf einer Felge 6 aufgespannt, so dass der Reifen-Innenraum 3 von dem Luftreifen 1 und einer Felgenaußenseite 5 begrenzt wird.

Gemäß Fig. 1 befindet sich im Reifen-Innenraum 3 weiterhin ein Schlauchpaket 4, das durch einen in mehreren Wicklungen N aufgewickelten Luftschlauch 7 ausgebildet wird. Die dargestellten Schlauchquerschnitte des Schlauchpaketes 4 stammen demnach von ein und demselben Luftschlauch 7, der in mehreren Wicklungen N aufgewickelt ist. Grundsätzlich können aber auch mehrere Luftschläuche 7 in einem Schlauchpaket 4 aufgewickelt werden, wobei ein Luftschlauch 7 bevorzugt wird. Ein erstes Ende 7a des Luftschlauches 7 wird dabei gemäß Fig. 2 luftdicht verschlossen und ein zweites Ende 7b bleibt geöffnet. Das zweite Ende 7b des Luftschlauches 7 kann mit einem Anschlussstück 7c, beispielsweise einem Winkel, verbunden sein, das durch eine Felgenöffnung 6c in der Felge 6 ragt. Das Anschlussstück 7c ist dabei derartig in der Felgenöffnung 6c angeordnet, dass der Reifen-Innenraum 3 weiterhin hermetisch abgedichtet ist. Dazu können zusätzliche Dichtmittel (nicht dargestellt) verwendet werden.

In Fig. 2 sind die verschiedenen Ebenen das Luftschlauches 7 in einer Draufsicht dargestellt. Demnach weist der Luftschlauch 7 eine Außenschicht 8, eine Innenschicht 9 und eine dazwischen liegende Verstärkungsschicht 10 auf. Die Verstärkungsschicht 10 wird hierbei durch mindestens zwei Lagen von Festigkeitsträgern 11, insbesondere durch Verstärkungsfäden, beispielsweise Cordfäden oder Zwirnfäden, ausgebildet, die in bestimmter Weise in das Material des Luftschlauches 7 vollumfänglich eingebettet sind und einen Kreuzverband darstellen. Gemäß diesem Ausführungsbeispiel wird zwischen einer Umfangsrichtung U des Luftschlauches 7 und den eingebetteten Festigkeitsträgern 11 ein Winkel W von ca. 45° in der einen Lage und -45° in der anderen Lage eingeschlossen.

Es sind auch andere Winkel W möglich, beispielsweise zwischen (+/-) 10° und (+/-) 50°, vorzugsweise zwischen (+/-) 40° und (+/-) 48°. Bei einer Schlauchkonstruktion mit gestrickten Festigkeitsträgern bilden die Kanten der Maschen die beschriebenen Winkel.

Im unaufgepumpten Zustand des Luftschlauches 7, d. h. bei einem entlüfteten Schlauch-Innenraum 12, weist dieser eine bestimmte Schlauchlänge L sowie einen bestimmten Schlauch-Innendurchmesser D auf. Wird der Luftschlauch 7 aufgepumpt, d. h. ein Schlauch-Innendruck pS im Schlauch-Innenraum 12 wird erhöht, z.B. über das geöffnete zweite Ende 7b des Luftschlauches 7 bzw. das Anschlussstück 7c, so bewirkt die Einstellung des Winkels W der Festigkeitsträger 11 gegenüber der Umfangsrichtung U, dass die Schlauchlänge L abnimmt und der Schlauch-Innendurchmesser D gleichzeitig zunimmt. Der Luftschlauch 7 zieht sich somit zusammen und wird gleichzeitig breiter.

Dies ist aus Fig. 3 ersichtlich: Während das Schlauchpaket 4 in Fig. 1 im unaufgepumpten Zustand des Luftschlauches 7 von der Felgenaußenseite 5 abheben kann, wird das Schlauchpaket 4 durch den sich zusammenziehenden Luftschlauch 7 gemäß Fig. 3 vollumfänglich in Richtung der Felgenaußenseite 5 gezogen, so dass dieser mit den der Felge 6 zugewandten Wicklungen N des Luftschlauches 7 an der Felge 6 anliegt. Das Schlauchpaket 4 liegt in diesem Zustand idealerweise koaxial zur Felge 6. Gleichzeitig wird das Schlauchpaket 4 voluminöser, da sich die einzelnen Wicklungen N des Luftschlauches 7 aufgrund des jeweils anwachsenden Schlauch-Innendurchmessers D gegenseitig wegdrücken.

Durch die Wahl des Winkels W der Festigkeitsträger 11 ist es möglich, das Schlauchpaket 4 durch Aufwickeln eines Luftschlauches 7 vor dem Positionieren im Reifen-Innenraum 3 auszubilden. Dieses kann dann anschließend zusammen mit dem Luftreifen 1 im unaufgepumpten Zustand ohne die Gefahr von Beschädigungen koaxial über ein Felgenhorn 6a der Felge 6 gezogen und anschließend über einem Tiefbett 6b der Felge 6 positioniert werden. Im unaufgepumpten Zustand kann das Schlauchpaket 4 vollumfänglich vom Tiefbett 6b der Felge 6 abgehoben werden (Fig. 1).

Der Luftschlauch 7 kann dazu im unaufgepumpten Zustand beispielsweise einen Schlauch-Innendurchmesser D von ca. 75 mm und eine Schlauchlänge L von ca. 40 m aufweisen. Es sind aber auch Schlauch-Innendurchmesser D von zwischen 10mm und 200mm und Schlauchlängen L von zwischen 12m und 250m möglich, wobei der Schlauch-Innendurchmesser D je nach Auslegung des Reifen-Innenraums 3 an die Schlauchlänge L bzw. umgekehrt anzupassen ist.

Über das Anschlussstück 7c kann der Luftschlauch 7 anschließend in seiner Position über dem Tiefbett 6b aufgepumpt werden, so dass sich der Schlauch-Innendruck pS erhöht. Dabei kann über die Festigkeitsträger 11 eingestellt werden, dass das Schlauchpaket 4 aus dem mehrfach aufgewickelten Luftschlauch 7 eine feste und zentrierte Position auf der Felge 6 bzw. in dem Tiefbett 6b einnimmt, sobald der Schlauch-Innendruck pS von dem Reifen-Innendruck pR um mindestens 1 bar nach oben hin abweicht. Dies resultiert daraus, dass beim Erhöhen des Schlauch-Innendruckes pS die Schlauchlänge L abnimmt und der Schlauch-Innendurchmesser D anwächst. Dadurch legt sich der Schlauchkörper 4 in das Tiefbett 6b der Felge 6 wie in Fig. 3 dargestellt.

Das Einlassen des Druckmittels in den Schlauch-Innenraum 12 kann über ein erstes Schlauch-Ventil 14 erfolgen, das beispielsweise an dem Anschlussstück 7c angeordnet ist. Je nach Auslegung kann darüber ein Schlauch-Innendruck pS von beispielsweise zwischen 5 bar und 25 bar eingestellt und gehalten werden. Über ein umschaltbares zweites Schlauch-Ventil 15 kann der Schlauch-Innenraum 12 situativ mit dem Reifen-Innenraum 3 strömungsverbunden werden. Dadurch kann eine Druckangleichung zwischen den beiden Innenräumen 3, 12 stattfindet.

Dies kann dazu genutzt werden, den Luftreifen 1 gezielt aufzupumpen, vorausgesetzt der Schlauch-Innendruck pS ist höher als der Reifen-Innendruck pR. Bei einem gezielten Ausbilden einer Strömungsverbindung über das zweite Schlauch-Ventil 15 wird der Schlauch-Innendruck pS geringer und der Reifen-Innendruck pR höher. Somit kann über ein gezieltes Öffnen des zweiten Schlauch-Ventils 15 situativ ein optimaler Reifen-Innendruck pR eingestellt werden.

Handelt es sich um ein Rad 100 für eine landwirtschaftliche Maschine kann für einen Betrieb auf der Straße beispielsweise ein optimaler Reifen-Innendruck pR von zwischen 1,2 bar und 2 bar und für einen Betrieb auf dem Acker ein optimaler Reifen-Innendruck pR von 0,4 bar bis 1,2 bar vorgesehen sein. Nachdem die landwirtschaftliche Maschine also auf dem Acker betrieben wurde, kann durch Umschalten des zweiten Schlauch-Ventils 15 der Reifen-Innendruck pR von zwischen 0,4 bar und 1,2 bar auf zwischen 1,2 bar und 2 bar angehoben werden. Durch eine entsprechende Wahl des Schlauch-Innendruckes pS kann dieser Vorgang auch mehrere Male durchgeführt werden, beispielsweise bei mehrfach wechselndem Betrieb zwischen dem Acker und der Straße. Ein Absenken des Reifen-Innendruckes pR, beispielsweise bei einem Wechsel zwischen dem Betrieb auf der Straße und dem Betrieb auf dem Acker, kann über das Reifen-Ventil 2 erfolgen.

Neben dieser Funktionalität des Schlauchpaketes 4 als Druckspeicher zum Erhöhen des Reifen-Innendruckes pR im Betrieb des jeweiligen Rades 100 kann das Schlauchpaket 4 aber auch als Notlaufelement in einem beliebigen Fahrzeug, beispielsweise einem PKW, einem LKW, einer landwirtschaftlichen Maschine, einem Flugzeug oder Fahrzeugen mit anderen Spezialreifen, dienen. Ist der jeweilige Luftreifen 1 demnach beschädigt und/oder undicht, so dass das Druckmittel aus dem Reifen-Innenraum 3 entweichen und der Reifen-Innendruck pR demnach nicht gehalten werden kann, kann das Schlauchpaket 4 mit dem aufgewickelten, unter dem Schlauch-Innendruck pS stehenden Luftreifen 7 dafür sorgen, dass das jeweilige Fahrzeug in einem Notlaufbetrieb bei geringer Geschwindigkeit weitgehend stabil zumindest in eine sichere Position gebracht werden kann, beispielsweise bis zur nächsten Werkstatt oder auf den Randstreifen o.ä..

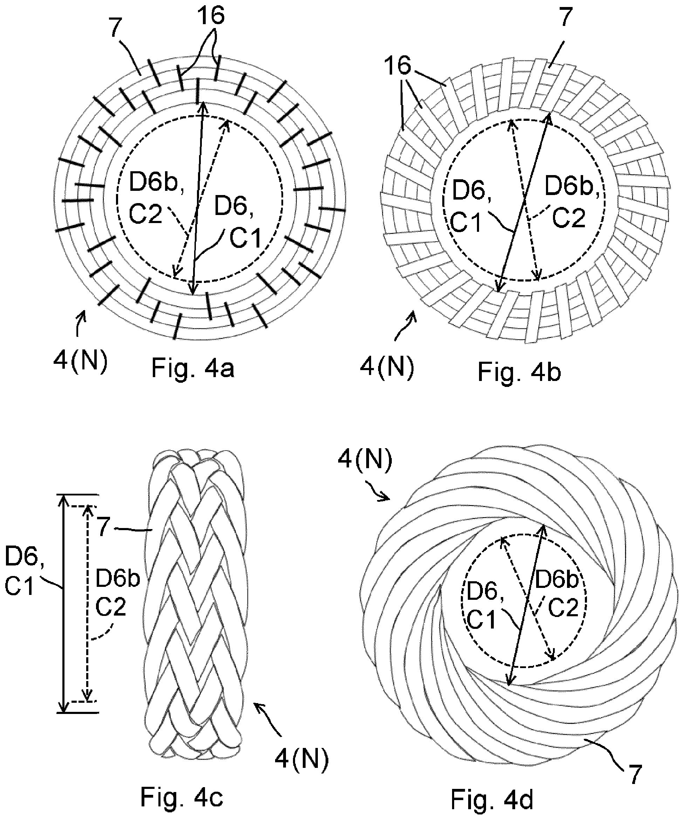

In den Figuren 4a bis 4d sind unterschiedliche Möglichkeiten angegeben, wie das Schlauchpaket 4 aus dem Luftschlauch 7 vorab ausgebildet werden kann, bevor es zusammen mit dem Luftreifen 1, d.h. in diesen vollumfänglich eingelegt, auf die Felge 6 aufgezogen bzw. montiert und über dem Tiefbett 6b der Felge 6 positioniert wird.

Gemäß Fig. 4a ist ein Schlauchpaket 4 dargestellt, bei dem der entlüftete Luftschlauch 7 zunächst aufgewickelt wird, so dass sich im entlüfteten Zustand ein bestimmter erster Wickeldurchmesser C1 des Schlauchpaketes 4 ergibt. Nach dem Aufwickeln werden benachbarte Wicklungen N des Luftschlauches 7 mit Verbindungsmitteln 16 aneinander fixiert. Dadurch kann das Schlauchpaket 4 vorab ausgebildet und nachträglich zusammen mit dem Luftreifen 1 auf die Felge 6 aufgebracht werden, ohne dass sich der Luftschlauch 7 wieder abwickelt. Der erste Wickeldurchmesser C1 für den entlüfteten Zustand ist hierbei derartig gewählt, dass das Schlauchpaket 4 unbeschadet über das Felgenhorn 6a der Felge 6 gezogen werden kann. Dazu ist der erste Wickeldurchmesser C1 größer oder gleich einem Nenndurchmesser D6 der Felge 6. Die Verbindungsmittel 16 sind derartig zu wählen, dass diese den Veränderungen der Schlauchlänge L bzw. des Schlauch-Innendurchmessers D bei einem Verändern des Schlauch-Innendruckes pS standhalten können, d.h. die geometrischen Veränderungen des Schlauchpaketes 4 mitmachen, ohne an Spannkraft zu verlieren. Dazu können beispielsweise gummielastische Verbindungsmittel 16 vorgesehen sein.

Nach dem Erhöhen des Schlauch-Innendruckes pS im Luftschlauch 7 des in Fig. 4a dargestellten Schlauchpaketes 4 ergibt sich ab einem bestimmten Schlauch-Innendruck pS ein zweiter Wickeldurchmesser C2 (gestrichelt), der aufgrund des Winkels W zwischen den Festigkeitsträgern 11 im Luftschlauch 7 und der Umfangsrichtung U - wie bereits beschrieben - geringer ist als der erste Wickeldurchmesser C1. Der zweite Wickeldurchmesser C2 entspricht hierbei einem Tiefbett-Durchmesser D6b der Felge 6 im Tiefbett 6b, da sich der Schlauchkörper 4 ab dem jeweiligen Schlauch-Innendruck pS an dieses anlegt.

Gemäß Figur 4b ist eine weitere Möglichkeit der Ausbildung des Schlauchpaketes 4 dargestellt, bei der eine sogenannte Umschleuderung vorgesehen ist. Auch in diesem Ausführungsbeispiel wird zunächst der Luftschlauch 7 in mehreren Wicklungen N aufgewickelt, so dass sich im unaufgepumpten Zustand ein erster Wickeldurchmesser C1 ergibt, der ein beschädigungsfreies Aufziehen über das Felgenhorn 6a ermöglicht. Anschließend wird das Schlauchpaket 4 mit einem gummielastischen Verbindungsmittel 16 umschleudert bzw. vollständig spiralförmig umwickelt und das Schlauchpaket 4 dadurch für den Positioniervorgang auf der Felge 6 zusammengehalten. Bei einem Erhöhen des Schlauch-Innendruckes pS ergibt sich auch hier ein zweiter Wickeldurchmesser C2 (gestrichelt).

Gemäß Figur 4c ist vorgesehen, den Luftschlauch 7 ringförmig zu verflechten, wobei das dann geflochtene Schlauchpaket 4 im entlüfteten Zustand den ersten Wickeldurchmesser C1 aufweist, der ein beschädigungsfreies Aufziehen über das Felgenhorn 6a ermöglicht. Somit sind in diesem Ausführungsbeispiel keine zusätzlichen Verbindungsmittel 16 nötig, um das Schlauchpaket 4 für den Positioniervorgang auf der Felge 6 zusammenzuhalten. Bei einem Erhöhen des Schlauch-Innendruckes pS ergibt sich auch hier ein zweiter Wickeldurchmesser C2 (gestrichelt).

Gemäß Figur 4d kann weiterhin vorgesehen sein, den Luftschlauch 7 ringförmig zu verdrillen, wobei das dann verdrillte Schlauchpaket 4 im entlüfteten Zustand den ersten Wickeldurchmesser C1 aufweist, der ein beschädigungsfreies Aufziehen über das Felgenhorn 6a ermöglicht. Auch in diesem Ausführungsbeispiel sind keine zusätzlichen Verbindungsmittel 16 nötig, um das Schlauchpaket 4 für den Positioniervorgang auf der Felge 6 zusammenzuhalten. Bei einem Erhöhen des Schlauch-Innendruckes pS ergibt sich auch hier ein zweiter Wickeldurchmesser C2 (gestrichelt).

### Bezugszeichenliste

- 1: Luftreifen
- 2: Reifen-Ventil
- 3: Reifen-Innenraum
- 4: Schlauchpaket
- 5: Felgenaußenseite
- 6: Felge
- 6a: Felgenhorn
- 6b: Tiefbett der Felge 6
- 6c: Felgenöffnung
- 7: Luftschlauch
- 7a: erstes Ende des Luftschlauches 7
- 7b: zweites Ende des Luftschlauches 7
- 7c: Anschlussstück
- 8: Außenschicht
- 9: Innenschicht
- 10: Verstärkungsschicht
- 11: Festigkeitsträger
- 12: Schlauch-Innenraum
- 14: erstes Schlauch-Ventil
- 15: zweites Schlauch-Ventil
- 16: Verbindungsmittel
- 100: Rad

- C1: erster Wickeldurchmesser
- C2: zweiter Wickeldurchmesser
- D: Schlauch-Innendurchmesser
- D6: Nenndurchmesser der Felge 6
- D6b: Tiefbett-Durchmesser
- L: Schlauchlänge
- N: Wicklungen
- pR: Reifen-Innendruck
- pS: Schlauch-Innendruck
- U: Umfangsrichtung
- W: Winkel

## Patentansprüche

1. Rad (100), insbesondere für Fahrzeuge, mit einer Felge (6) und einem auf die Felge (6) aufgezogenen Luftreifen (1), wobei die Felge (6) und der Luftreifen (1) einen Reifen-Innenraum (3) begrenzen, wobei ein in dem Reifen-Innenraum (3) vorherrschender Reifen-Innendruck (pR) über ein Reifen-Ventil (2) variabel einstellbar ist,
wobei in dem Reifen-Innenraum (3) ein um die Felge (6) umlaufender Luftschlauch (7) mit einem Schlauch-Innenraum (12) angeordnet ist, wobei der Luftschlauch (7) den Reifen-Innenraum (3) teilweise ausfüllt,
wobei ein in dem Schlauch-Innenraum (12) des Luftschlauches (7) vorherrschender Schlauch-Innendruck (pS) über ein erstes Schlauch-Ventil (14) variabel einstellbar ist, **dadurch gekennzeichnet, dass**
der Luftschlauch (7) im Reifen-Innenraum (3) mehrfach um die Felge (6) umlaufend aufgewickelt ist, so dass innerhalb des Reifen-Innenraumes (3) ein Schlauchpaket (4) ausgebildet ist.

2. Rad (100) nach Anspruch 1,
**dadurch gekennzeichnet, dass**
das Schlauchpaket (4) im entlüfteten Zustand des Luftschlauches (7) einen ersten Wickeldurchmesser (C1) aufweist und sich das Schlauchpaket (4) bei Erhöhen des Schlauch-Innendruckes (pS) im Schlauch-Innenraum (12) an einen zweiten Wickeldurchmesser (C2) annähert, wobei der zweite Wickeldurchmesser (C2) geringer ist als der erste Wickeldurchmesser (C1).

3. Rad (100) nach Anspruch 2,
**dadurch gekennzeichnet, dass**
der erste Wickeldurchmesser (C1) des Schlauchpaketes (7) größer oder gleich einem Nenndurchmesser (D6) der Felge (6) ist, so dass ein vorab ausgebildetes Schlauchpaket (4) bei entlüftetem Luftschlauch (7) beschädigungsfrei über ein Felgenhorn (6a) der Felge (6) bewegt werden kann und/oder der zweite Wickeldurchmesser (C2) des Schlauchpaketes (4) einem Tiefbett-Durchmesser (D6b) eines Tiefbettes (6b) der Felge (6) entspricht, so dass sich das Schlauchpaket (4) beim Erhöhen des Schlauch-Innendruckes (pS) in das Tiefbett (6b) der Felge (6) legt zum Zentrieren und Halten des Schlauchpaketes (4) an der Felge (6).

4. Rad (100) nach einem der vorhergehenden Ansprüche,
**dadurch gekennzeichnet, dass**
der Luftschlauch (7) eine Außenschicht (8), eine Innenschicht (9) sowie eine dazwischen eingebettete Zwischenschicht (10) aufweist, wobei die Zwischenschicht (10) mindestens zwei Lagen von Festigkeitsträgern (11), insbesondere Verstärkungsfäden, aufweist, wobei die Festigkeitsträger (11) gegenüber einer Umfangsrichtung (U) des Luftschlauches (7) um einen Winkel (W) angewinkelt ausgerichtet sind.

5. Rad (100) nach Anspruch 4,
**dadurch gekennzeichnet, dass**
der Winkel (W) der Ausrichtung der Festigkeitsträger (11) gegenüber der Umfangsrichtung (U) des Luftschlauches (7) zwischen +/- 10° und +/- 53°, vorzugsweise zwischen +/- 40° und +/- 48° liegt und die mindestens zwei Lagen von Festigkeitsträgern (11) in einem Kreuzverband angeordnet sind.

6. Rad (100) nach einem der vorhergehenden Ansprüche,
**dadurch gekennzeichnet, dass**
einzelne Wicklungen (N) des mehrfach um die Felge (6) umlaufenden Luftschlauches (7) durch Verbindungsmittel (16) und/oder durch eine Verdrillung von einzelnen Wicklungen (N) und/oder einer Verflechtung von einzelnen Wicklungen (N) aneinandergehalten sind.

7. Rad (100) nach einem der vorhergehenden Ansprüche,
**dadurch gekennzeichnet, dass**
der Schlauch-Innenraum (12) mit dem Reifen-Innenraum (3) strömungsverbunden werden kann zum Bewirken einer Druckangleichung zwischen dem Reifen-Innendruck (pR) und dem Schlauch-Innendruck (pS).

8. Rad (100) nach Anspruch 7,
**dadurch gekennzeichnet, dass**
der Schlauch-Innenraum (12) über ein schaltbares zweites Schlauch-Ventil (15) mit dem Reifen-Innenraum (3) strömungsverbunden werden kann, wobei das zweite Schlauch-Ventil (15) ein elektrisch und/oder manuell schaltbares Ventil ist.

9. Rad (100) nach einem der vorhergehenden Ansprüche,
**dadurch gekennzeichnet, dass**
der mehrfach umlaufende Luftschlauch (7) des Schlauchpaketes (4) eine Schlauchlänge (L) von zwischen 12 m und 250 m, vorzugsweise 40 m, aufweist und einen Schlauch-Innendurchmesser D von zwischen 10 mm und 200 mm, vorzugsweise 75 mm.

10. Rad (100) nach einem der vorhergehenden Ansprüche,
**dadurch gekennzeichnet, dass**
der Luftschlauch (7) ein erstes Ende (7a) und ein zweites Ende (7b) aufweist, wobei zumindest das erste Ende (7a) luftdicht verschlossen ist.

11. Rad (100) nach Anspruch 10,
**dadurch gekennzeichnet, dass**
das zweite Ende (7b) geöffnet ist und über das geöffnete zweite Ende (7b) der Schlauch-Innendruck (pS) im Schlauch-Innenraum (12) eingestellt werden kann, wobei dazu an dem zweiten Ende (7b) ein durch eine Felgenöffnung (6c) in der Felge (6) geführtes Anschlussstück (7c) angeordnet ist und das Anschlussstück (7c) mit dem ersten Schlauch-Ventil (14) in Strömungsverbindung steht zum Einstellen des Schlauch-Innendruckes (pS) im Schlauch-Innenraum (12) über das zweite Ende (7b).

12. Rad (100) nach einem der vorhergehenden Ansprüche,
**dadurch gekennzeichnet, dass**
der Reifen-Innendruck (pR) im Betrieb des Rades (100) geringer ist als der Schlauch-Innendruck (pS), wobei der Schlauch-Innendruck (pS) zwischen 5bar und 25bar einstellbar ist.

13. Verfahren zum Herstellen eines Rades (100) nach einem der vorhergehenden Ansprüche, mit mindestens den folgenden Schritten:
- Bereitstellen einer Felge (6), eines Luftreifens (1) sowie eines Luftschlauches (7);
- Aufwickeln des Luftschlauches (7) unter Ausbildung eines Schlauchpaketes (4) mit einem ersten Wickeldurchmesser (C1);
- Einlegen des Schlauchpaketes (4) in den Luftreifen (1);
- Aufziehen des Luftreifens (1) samt Schlauchpaket (4) über das Felgenhorn (6a) auf die Felge (6), so dass ein Reifen-Innenraum (3) zwischen der Felge (6) und dem Luftreifen (1) ausgebildet wird und das Schlauchpaket (4) oberhalb des Tiefbettes (6b) der Felge (6) in dem Reifen-Innenraum (3) positioniert ist und damit mehrfach um die Felge (6) umlaufend aufgewickelt ist.

14. Verfahren nach Anspruch 13,
**dadurch gekennzeichnet, dass**
für den Betrieb des Rades (100) weiterhin folgende Schritte durchgeführt werden:
- Erhöhen eines Schlauch-Innendruckes (pS) im Luftschlauch (7) zum Zentrieren und Festlegen der Position des Schlauchpaketes (4) an der Felge (6),
- Erhöhen des Reifen-Innendruckes (pR) zum Aufpumpen des Luftreifens (1).

15. Verfahren nach Anspruch 13 oder 14,
**dadurch gekennzeichnet, dass**
der Schlauch-Innenraum (12) des Luftschlauches (7) des Schlauchpaketes (4) mit dem Reifen-Innenraum (3) des Luftreifens (1) zumindest zeitweise verbunden wird zum Erhöhen des Reifen-Innendruckes (pR) im Betrieb des Rades (100) und/oder das Schlauchpaket (4) als Notlaufelement in dem Rad (100) bei einer Entlüftung des Reifen-Innenraumes (3) aufgrund einer Beschädigung des Luftreifens (1) verwendet wird.

## Claims

1. Wheel (100), in particular for vehicles, having a rim (6) and a pneumatic tyre (1) which is pulled onto the rim (6), wherein the rim (6) and the pneumatic tyre (1) delimit a tyre inner space (3), wherein a tyre internal pressure (pR) which prevails in the tyre inner space (3) can be set in a variable manner by way of a tyre valve (2),
wherein a pneumatic tube (7) which runs in encircling fashion around the rim (6) and which has a tube inner space (12) is arranged in the tyre inner space (3), wherein the pneumatic tube (7) partially fills the tyre inner space (3), wherein a tube internal pressure (pS) which prevails in the tube inner space (12) of the pneumatic tube (7) can be set in a variable manner by way of a first tube valve (14),
**characterized in that**
the pneumatic tube (7) in the tyre inner space (3) is wound so as to run in encircling fashion around the rim (6) multiple times, such that a tube pack (4) is formed within the tyre inner space (3).

2. Wheel (100) according to Claim 1,
**characterized in that**
the tube pack (4) has a first winding diameter (C1) in the ventilated state of the pneumatic tube (7) and the tube pack (4) approaches a second winding diameter (C2) when the tube internal pressure (pS) in the tube inner space (12) increases, wherein the second winding diameter (C2) is smaller than the first winding diameter (C1).

3. Wheel (100) according to Claim 2,
**characterized in that**
the first winding diameter (C1) of the tube pack (7) is greater than or equal to a nominal diameter (D6) of the rim (6), such that a tube pack (4) formed in advance can be moved over a rim flange (6a) of the rim (6) in a damage-free manner when the pneumatic tube (7) is ventilated, and/or the second winding diameter (C2) of the tube pack (4) corresponds to a drop centre diameter (D6b) of a drop centre (6b) of the rim (6), such that when the tube internal pressure (pS) increases, the tube pack (4) is inserted into the drop centre (6b) of the rim (6) for the purpose of centring and holding the tube pack (4) on the rim (6).

4. Wheel (100) according to one of the preceding claims,
**characterized in that**
the pneumatic tube (7) has an outer layer (8), an inner layer (9) and an intermediate layer (10) embedded therebetween, wherein the intermediate layer (10) has at least two plies of strengthening members (11), in particular reinforcing threads, wherein the strengthening members (11) are oriented so as to be angled at an angle (W) in relation to a circumferential direction (U) of the pneumatic tube (7).

5. Wheel (100) according to Claim 4,
**characterized in that**
the angle (W) of the orientation of the strengthening members (11) in relation to the circumferential direction (U) of the pneumatic tube (7) is between +/- 10° and +/- 53°, preferably between +/- 40° and +/- 48°, and the at least two plies of strengthening members (11) are arranged in a criss-crossing assembly.

6. Wheel (100) according to one of the preceding claims,
**characterized in that**
individual windings (N) of the pneumatic tube (7) which runs in encircling fashion around the rim (6) multiple times are held against one another by connecting means (16) and/or by twisting of individual windings (N) and/or by interweaving of individual windings (N).

7. Wheel (100) according to one of the preceding claims,
**characterized in that**
the tube inner space (12) can be flow-connected to the tyre inner space (3) for the purpose of effecting a pressure equalization between the tyre internal pressure (pR) and the tube internal pressure (pS).

8. Wheel (100) according to Claim 7,
**characterized in that**
the tube inner space (12) can be flow-connected to the tyre inner space (3) by way of a switchable second tube valve (15), wherein the second tube valve (15) is an electrically and/or manually switchable valve.

9. Wheel (100) according to one of the preceding claims,
**characterized in that**
the pneumatic tube (7), which runs in encircling fashion multiple times, of the tube pack (4) has a tube length (L) of between 12 m and 250 m, preferably 40 m, and a tube inner diameter D of between 10 mm and 200 mm, preferably 75 mm.

10. Wheel (100) according to one of the preceding claims,
**characterized in that**
the pneumatic tube (7) has a first end (7a) and a second end (7b), wherein at least the first end (7a) is closed in an airtight manner.

11. Wheel (100) according to Claim 10,
**characterized in that**
the second end (7b) is open and the tube internal pressure (pS) in the tube inner space (12) can be set by way of the open second end (7b), wherein, to this end, a connection piece (7c) which is guided through a rim opening (6c) in the rim (6) is arranged at the second end (7b) and the connection piece (7c) is flow-connected to the first tube valve (14) for the purpose of setting the tube internal pressure (pS) in the tube inner space (12) by way of the second end (7b).

12. Wheel (100) according to one of the preceding claims,
**characterized in that**
the tyre internal pressure (pR) during operation of the wheel (100) is lower than the tube internal pressure (pS), wherein the tube internal pressure (pS) can be set between 5 bar and 25 bar.

13. Method for producing a wheel (100) according to one of the preceding claims, comprising at least the following steps:
- providing a rim (6), a pneumatic tyre (1) and a pneumatic tube (7);
- winding the pneumatic tube (7) with formation of a tube pack (4) having a first winding diameter (C1);
- inserting the tube pack (4) into the pneumatic tyre (1);
- pulling the pneumatic tyre (1) together with tube pack (4) over the rim flange (6a) onto the rim (6), such that a tyre inner space (3) is formed between the rim (6) and the pneumatic tyre (1) and the tube pack (4) is positioned above the drop centre (6b) of the rim (6) in the tyre inner space (3) and thus is wound so as to run in encircling fashion around the rim (6) multiple times.

14. Method according to Claim 13,
**characterized in that**
the following steps are also carried out for operation of the wheel (100):
- increasing a tube internal pressure (pS) in the pneumatic tube (7) for the purpose of centring and setting the position of the tube pack (4) on the rim (6);
- increasing the tyre internal pressure (pR) for the purpose of inflating the pneumatic tyre (1).

15. Method according to Claim 13 or 14,
**characterized in that**
the tube inner space (12) of the pneumatic tube (7) of the tube pack (4) is at least intermittently connected to the tyre inner space (3) of the pneumatic tyre (1) for the purpose of increasing the tyre internal pressure (pR) during operation of the wheel (100) and/or the tube pack (4) is used as emergency running element in the wheel (100) when the tyre inner space (3) is ventilated owing to damage to the pneumatic tyre (1).

## Revendications

1. Roue (100), notamment pour véhicules, comprenant une jante (6) et un pneumatique (1) monté sur la jante (6), la jante (6) et le pneumatique (1) délimitant un espace intérieur de pneumatique (3), une pression intérieure de pneumatique (pR) régnant dans l'espace intérieur de pneumatique (3) pouvant être réglée de manière variable par l'intermédiaire d'une soupape de pneumatique (2),
une chambre à air (7) faisant le tour de la jante (6), avec un espace intérieur de chambre à air (12), étant agencée dans l'espace intérieur de pneumatique (3), la chambre à air (7) remplissant partiellement l'espace intérieur de pneumatique (3), une pression intérieure de chambre à air (pS) régnant dans l'espace intérieur de chambre à air (12) de la chambre à air (7) pouvant être réglée de manière variable par l'intermédiaire d'une première soupape de chambre à air (14),
**caractérisée en ce que**
la chambre à air (7) est enroulée plusieurs fois en faisant le tour de la jante (6) dans l'espace intérieur de pneumatique (3), de telle sorte qu'un paquet de chambre à air (4) est formé à l'intérieur de l'espace intérieur de pneumatique (3).

2. Roue (100) selon la revendication 1, **caractérisée en ce que** le paquet de chambre à air (4) présente à l'état dégonflé de la chambre à air (7) un premier diamètre d'enroulement (C1) et le paquet de chambre à air (4) se rapproche d'un deuxième diamètre d'enroulement (C2) lors d'une augmentation de la pression intérieure de chambre à air (pS) dans l'espace intérieur de chambre à air (12), le deuxième diamètre d'enroulement (C2) étant inférieur au premier diamètre d'enroulement (C1).

3. Roue (100) selon la revendication 2, **caractérisée en ce que** le premier diamètre d'enroulement (C1) du paquet de chambre à air (7) est supérieur ou égal à un diamètre nominal (D6) de la jante (6), de telle sorte qu'un paquet de chambre à air (4) formé au préalable peut être déplacé sans endommagement au-dessus d'un rebord de jante (6a) de la jante (6) lorsque la chambre à air (7) est dégonflée et/ou le deuxième diamètre d'enroulement (C2) du paquet de chambre à air (4) correspond à un diamètre de fond (D6b) d'un fond (6b) de la jante (6), de telle sorte que, lors d'une augmentation de la pression intérieure de chambre à air (pS), la chambre à air (4) se met en place dans le fond (6b) de la jante (6) pour centrer et maintenir le paquet de chambre à air (4) sur la jante (6).

4. Roue (100) selon l'une quelconque des revendications précédentes, **caractérisée en ce que** la chambre à air (7) présente une couche extérieure (8), une couche intérieure (9) ainsi qu'une couche intermédiaire (10) intercalée entre elles, la couche intermédiaire (10) présentant au moins deux strates de supports de résistance (11), notamment des fils de renforcement, les supports de résistance (11) étant orientés inclinés d'un angle (W) par rapport à une direction circonférentielle (U) de la chambre à air (7).

5. Roue (100) selon la revendication 4, **caractérisée en ce que** l'angle (W) de l'orientation des supports de résistance (11) par rapport à la direction circonférentielle (U) de la chambre à air (7) est compris entre +/- 10° et +/- 53°, de préférence entre +/- 40° et +/- 48°, et les au moins deux strates de supports de résistance (11) sont agencées en un assemblage croisé.

6. Roue (100) selon l'une quelconque des revendications précédentes, **caractérisée en ce que** des enroulements individuels (N) de la chambre à air (7) faisant plusieurs fois le tour de la jante (6) sont maintenus les uns contre les autres par des moyens de liaison (16) et/ou par une torsade d'enroulements individuels (N) et/ou un entrelacement d'enroulements individuels (N).

7. Roue (100) selon l'une quelconque des revendications précédentes, **caractérisée en ce que** l'espace intérieur de chambre à air (12) peut être relié fluidiquement à l'espace intérieur de pneumatique (3) pour réaliser une égalisation de pression entre la pression intérieure de pneumatique (pR) et la pression intérieure de chambre à air (pS).

8. Roue (100) selon la revendication 7, **caractérisée en ce que** l'espace intérieur de chambre à air (12) peut être relié fluidiquement à l'espace intérieur de pneumatique (3) par l'intermédiaire d'une deuxième soupape de chambre à air commutable (15), la deuxième soupape de chambre à air (15) étant une soupape commutable électriquement et/ou manuellement.

9. Roue (100) selon l'une quelconque des revendications précédentes, **caractérisée en ce que** la chambre à air (7) du paquet de chambre à air (4), faisant plusieurs fois le tour, présente une longueur de chambre à air (L) comprise entre 12 m et 250 m, de préférence 40 m, et un diamètre intérieur de chambre à air D compris entre 10 mm et 200 mm, de préférence 75 mm.

10. Roue (100) selon l'une quelconque des revendications précédentes, **caractérisée en ce que** la chambre à air (7) présente une première extrémité (7a) et une deuxième extrémité (7b), au moins la première extrémité (7a) étant fermée de manière étanche à l'air.

11. Roue (100) selon la revendication 10, **caractérisée en ce que** la deuxième extrémité (7b) est ouverte et la pression intérieure de chambre à air (pS) dans l'espace intérieur de chambre à air (12) peut être réglée par l'intermédiaire de la deuxième extrémité ouverte (7b) ; à cet effet, une pièce de raccordement (7c) acheminée par une ouverture de jante (6c) dans la jante (6) étant agencée au niveau de la deuxième extrémité (7b) et la pièce de raccordement (7c) étant en liaison fluidique avec la première soupape de chambre à air (14) pour régler la pression intérieure de chambre à air (pS) dans l'espace intérieur de chambre à air (12) par l'intermédiaire de la deuxième extrémité (7b).

12. Roue (100) selon l'une quelconque des revendications précédentes, **caractérisée en ce que** la pression intérieure de pneumatique (pR) pendant le fonctionnement de la roue (100) est inférieure à la pression intérieure de chambre à air (pS), la pression intérieure de chambre à air (pS) étant réglable entre 5 bar et 25 bar.

13. Procédé de fabrication d'une roue (100) selon l'une quelconque des revendications précédentes, comprenant au moins les étapes suivantes :
- la fourniture d'une jante (6), d'un pneumatique (1) ainsi que d'une chambre à air (7) ;
- l'enroulement de la chambre à air (7) en formant un paquet de chambre à air (4) ayant un premier diamètre d'enroulement (C1) ;
- la mise en place du paquet de chambre à air (4) dans le pneumatique (1) ;
- le montage du pneumatique (1) avec la chambre à air (4) au-dessus du rebord de jante (6a) sur la jante (6), de telle sorte qu'un espace intérieur de pneumatique (3) est formé entre la jante (6) et le pneumatique (1), et le paquet de chambre à air (4) est positionné au-dessus de la base (6b) de la jante (6) dans l'espace intérieur de pneumatique (3) et est ainsi enroulé plusieurs fois en faisant le tour de la jante (6).

14. Procédé selon la revendication 13, **caractérisé en ce que**, pour le fonctionnement de la roue (100), les étapes suivantes sont en outre effectuées :
- l'augmentation d'une pression intérieure de chambre à air (pS) dans la chambre à air (7) pour centrer et fixer la position du paquet de chambre à air (4) sur la jante (6) ;
- l'augmentation de la pression intérieure de pneumatique (pR) pour gonfler le pneumatique (1).

15. Procédé selon la revendication 13 ou 14, **caractérisé en ce que** l'espace intérieur de chambre à air (12) de la chambre à air (7) du paquet de chambre à air (4) est relié au moins temporairement à l'espace intérieur de pneumatique (3) du pneumatique (1) pour augmenter la pression intérieure de pneumatique (pR) pendant le fonctionnement de la roue (100) et/ou le paquet de chambre à air (4) est utilisé en tant qu'élément de secours dans la roue (100) en cas de dégonflage de l'espace intérieur de pneumatique (3) en raison d'un endommagement du pneumatique (1).
